# EUROPÄISCHE PATENTANMELDUNG

(11) **EP 1 225 375 A2**
(43) Veröffentlichungstag der Anmeldung: **24.07.2002**
(21) Anmeldenummer: 02001204.3
(22) Anmeldetag: 17.01.2002
(51) Int. Cl.: F16H 63/18

(54) **Schaltwalze eines Wechselgetriebes**

(30) Priorität: 23.01.2001 DE 10102960
(71) Anmelder: INA- Schaeffler KG, 91074 Herzogenaurach (DE)
(72) Erfinder: Döppling, Horst, 91074 Herzogenaurach (DE); Steinberger, Wolfgang, 91074 Herzogenaurach (DE); Winkler, Manfred, 91086 Aurachtal (DE)

(57) **Zusammenfassung**

Eine Schaltwalze (11) eines Wechselgetriebes mit einem um die Längsmittelachse der Schaltwalze (11) zumindest schwenkbaren Hohlzylinder (13), mit zumindest einem Abschnitt (21, 22) aus einem Blech und mit Führungsbahnen (16, 17, 18) weist eine Verbindung für die ringförmig geformten Abschnitte (21, 22) auf, die durch wenigstens einen in eine Ausnehmung (20a) formschlüssig eingreifenden Ansatz (19a) gebildet ist.

## Beschreibung

### Anwendungsgebiet der Erfindung

Die Erfindung betrifft eine Schaltwalze eines Wechselgetriebes mit einem um die Längsmittelachse der Schaltwalze zumindest schwenkbaren Hohlzylinder und zumindest mit einem Abschnitt aus Blech, wobei der Abschnitt mit wenigstens einer Führungsbahn versehen ist und das Blech in Umfangsrichtung der Schaltwalze ringförmig geformt ist, so dass sich jeweils zwei aufeinander zugebrachte Enden des Abschnittes gegenüberliegen und die Enden miteinander verbindbar sind.

### Hintergrund der Erfindung

Die Schaltwalzen nach dem Stand der Technik sind in der Regel im Wesentlichen zylindrisch als Hohlkörper ausgebildet. Sie sind um ihre Längsmittelachse schwenkbar oder verdrehbar angeordnet. Dazu weisen sie an der Stirnseite ihres zylindrischen Hohlkörpers Deckel mit Zapfen für eine drehbare Lagerung auf oder sitzen mittels Flanschen drehbar auf einer Welle bzw. sind auf einer drehbaren Welle befestigt. Auf dem oder in einem Hohlkörper sind zumeist mehrere Führungsbahnen ausgebildet. Die Führungsbahnen dienen zum zwangsweisen Bewegen und Führen von Schaltgabeln oder Schaltfingern in vorbestimmte Richtungen. Die Richtungen sind durch den Verlauf der Führungsbahnen vorbestimmt. So verlaufen die Führungsbahnen entlang einer Umfangslinie oder geradlinig parallel zur Längsmittelachse der Schaltwalze. Sie verlaufen häufiger auch schräg zu den vorgenannten Richtungen oder nehmen einen kurvenförmigen Verlauf.

Ein bekanntes Verfahren der Fertigung von Schaltwalzen und eine so entstandene Schaltwalze sind nachfolgend beschrieben. In Ihrem Ausgangszustand liegt die Schaltwalze zunächst als flaches Blech zugeschnitten oder als ein von Bandmaterial aus Blech abgelängter Streifen vor. Die Führungsbahnen zum Führen einer Schaltgabel bzw. eines Schaltfingers sind beispielsweise im gestreckten oder gebogenen Zustand des Blechstreifens durch Stanzen, Prägen, Walzen oder ähnliche geeignete Verfahren eingebracht. Eine andere Möglichkeit sieht vor, dass die Führungsbahnen im ausgestreckten oder gebogenen Zustand des Bleches durch Blech-, Draht-, oder Vierkantmaterial gebildet und mittels z. B. Schweißen auf der Walze befestigt sind. Das Blech oder der Blechstreifen werden dann durch geeignete Verfahren wie Biegen oder Rollen kreisrund zu einem Ring geformt. Die schließlich einander gegenüberliegenden Biegeenden werden zueinander auf Stoß gebracht und aneinander ausgerichtet. Anschließend werden die Enden durch geeignete Schweißverfahren miteinander verschweißt. An dem somit entstandenen Hohlzylinder werden dann die Flansche, Deckel usw. befestigt.

Eine Schaltwalze der gattungsbildenden Art und ein Prozess für Ihre Fertigung ist in dem Abstract der japanischen Patentanmeldung JP 60-026 857 beschrieben. Danach sind in ein Stahlblech Führungsbahnen eingebracht und aus dem Stahlblech ist ein Hohlzylinder geformt. Die Biegeenden des Stahlbleches sind miteinander verschweißt. An dem Zylinder sind anschließend Deckel mit Zapfen befestigt. Schließlich folgt eine spanabhebende Nachbearbeitung der Schaltwalze.

Derartig gestaltete Schaltwalzen sind insbesondere in der Großserien- bzw. Massenfertigung relativ material- und kostensparend herzustellen. Der Formgebung der Schaltwalzen sind indes bei Verwendung des vorstehend beschriebenen Fertigungsverfahrens in Abhängigkeit der Blechdicke, des Durchmessers der Walze und der Ausführung sowie Tiefe der Führungsbahnen Grenzen gesetzt. Das betrifft insbesondere die Ausbildung der Führungsbahnen. Der Einsatz von möglichst dünnem Blech ist deshalb vorteilhaft. Die Verwendung von dünnem Material wiederum kann sich nachteilig auf die Festigkeit der Schaltwalze auswirken.

Das Schweißen stumpf aneinanderliegender Enden von Blechen erfordert bekannterweise ein geringes Spaltmaß zwischen den Enden. Die Stoßfuge muss möglichst klein sein. Ein hochgenaues und aufwändiges Ausrichten der Enden aneinander und zueinander ist dazu, sowie auch für die Genauigkeit der fertigen Schaltwalze, erforderlich. Oftmals bleiben die Biegeenden trotz des kreisförmigen Biegens gerade und müssen deshalb von der Kreisringform abweichend überbogen werden. Die Lage der Stoßenden zueinander muss nach dem exakten Ausrichten mit Haltemitteln gesichert werden um ein Vergrößern der Stoßfuge vor dem Schweißen und während des Schweißens zu verhindern.

Das Einleiten von hohen Temperaturen beim Schweißen und der daraus folgende Wärmeverzug des Bauteiles sowie das partielle Auffedern relativ dicker gebogener Bleche nach der Formgebung wirken sich nachteilig auf die Genauigkeit der Ausführung einer Schaltwalze aus. Aufwändige und kostenintensive spanabhebende Nachbearbeitung der Schaltwalze sind die Folge.

### Zusammenfassung der Erfindung

Die Aufgabe der Erfindung ist es daher eine Schaltwalze zu schaffen, deren Gestalt die vorstehend beschriebenen Nachteile vermeidet.

Diese Aufgabe wird nach den kennzeichnenden Teil des Anspruches 1 dadurch gelöst, dass die Enden durch wenigstens einen an zumindest einem der Enden ausgebildeten sowie in eine Ausnehmung des gegenüberliegenden Endes greifenden Ansatz miteinander verbunden sind. An einem Biegeende des Bleches ist ein in radiale und/oder Umfangsrichtung hervorstehender Ansatz ausgebildet. Dieser Ansatz greift in eine Ausnehmung an dem gegenüberliegenden Biegeende ein. Die Biegeenden sind somit miteinander verhakt und aneinander fixiert. Je nach Gestaltung des Eingriffes ist eine dauerhafte formschlüssige Verbindung hergestellt oder die Biegeenden sind für eine entgültige Fixierung oder Sicherung aneinander in ihrer Stellung zueinander formschlüssig ohne aufwändige Hilfsmittel ausgerichtet.

Mit einer Ausgestaltung der Erfindung sind für eine bessere Haltbarkeit der Verbindung mehrere Paarungen von Ausnehmungen und Ansätzen vorgesehen. Vorzugsweise sind an jedem der einander zugewandten Biegeenden jeweils Ansätze und Ausnehmungen und hier wiederum bevorzugt in wechselnder Reihenfolge nebeneinander angeordnet. Dieser wechselnden Anordnung von Ansätzen und Ausnehmungen liegt dann am anderen Ende des Abschnittes die gleiche Anzahl von Ansätzen und Ausnehmungen gegenüber, wobei jedem Ansatz an dem einen Biegeende jeweils eine Ausnehmung an dem anderen gegenüberliegenden Biegeende zugeordnet ist und umgekehrt.

Eine bevorzugte Ausgestaltung der Erfindung sieht vor, dass die Ausnehmung sich zumindest einseitig zu einer Öffnung an der Stimseite des Endes hin verengt und der Ansatz mit einer zu der Ausnehmung korrespondierenden Außenkontur stirnseitig von dem gegenüberliegenden Ende abgeht sowie in die Ausnehmung eingehängt ist. Diese Verbindung ist also durch das Ineinandergreifen von hinterschnittenen Konturen des Ansatzes und der Ausnehmung hergestellt. Dazu verbreitert sich der Ansatz in einer Längsebene des Bleches sowie quer zu seiner Erstreckung von dem Biegeende ausgehend in Richtung seines freien Endes wenigstes partiell. Der Ansatz kann dabei T-förmig ausgebildet sein aber auch in der Ebene einseitig hakenförmig oder die bekannte Form des Schwalbenschwanzes aufweisen. Dieser Kontur des Ansatzes ist eine passende Kontur der Ausnehmung zugeordnet. Die Ausnehmung weist dazu auch wenigstens eine in entgegengesetzte Richtung zum Ansatz wirkende Hinterschneidung auf. Dazu ist das Biegeende mit der Ausnehmung stirnseitig mit einer zum andere Biegeende weisenden Öffnung der Ausnehmung versehen. Die engste Stelle der Ausnehmung ist in der Öffnung. Von der Öffnung ausgehend erweitert sich die Ausnehmung angepasst in der gleichen Längsebene und der gleichen Richtung wie die Erweiterung des Ansatzes.

Der Ansatz wird beim Verbinden der Biegeenden in die Ausnehmung eingehängt. Eine formschlüssige Verbindung ist hergestellt. Bevorzugte Ausgestaltungen sehen Sicherungen der erfindungsgemäßen Verbindung durch Schweißen, durch einen Presssitz des Ansatzes in der Ausnehmung oder durch Materialverdrängung aus dem Ansatz vor. Diese Maßnahmen sollen bevorzugt nur noch zum Sichern der Verbindung eingesetzt werden, da die Verbindung an sich durch den Formschluss zwischen dem Ansatz und der Ausnehmung erzeugt werden kann. Die Enden sind ohne zusätzliche Maßnahmen exakt zueinander ausgerichtet. Hilfsmittel zum Sichern der Position der Enden zueinander beim Schweißen sind nicht erforderlich.

Das Verschweißen ist nur noch an wenigen Punkten durchzuführen. Damit wird weniger Hitze in das Schweißstück eingeleitet. Der Wärmeverzug ist demzufolge geringer.

Für den Presssitz sind die Konturen des Ansatzes und der Ausnehmung zwar aneinander angepasst, der Ansatz weist jedoch ein notwendiges Übermaß für einen sicheren Sitz nach dem Einpressen in die Ausnehmung auf.

Material ist beispielsweise durch eine oder mehrere Prägungen zu den Rändern des Ansatzes in der Ausnehmung verdrängbar. Das verdrängte Material wird dabei gegen die begrenzende Wandung der Ausnehmung gepresst. Dabei ist entweder eine Art Presssitz des Ansatzes in der Ausnehmung hergestellt oder die einander berührenden Wandungen des Ansatzes und/oder der Ausnehmung verformen sich derartig, dass die verbindenden Enden nicht mehr voneinander lösbar sind. Eine weitere Möglichkeit der Sicherung durch Materialverdrängung ist durch ein Verstemmen der Ränder der Ausnehmung mit dem Ansatz erzeugt.

Der oder die Abschnitte enthalten die oder zumindest einen Teil der Führungsbahn für das Führen eines Schaltfingers bzw. einer Schaltgabel oder ähnlichen Elementen. Die Führungsbahnen sind entweder durch Stanzen oder Prägen, Durchstellen bzw. Walzen und ähnliche geeignete Verfahren in den/die Abschnitt(e) eingebracht. Dabei liegt der oder liegen die Abschnitte bevorzugt in ihrem Ausgangszustand als Blechplatine oder gestreckter Blechstreifen vor. Es besteht auch die Möglichkeit ein endloses Band aus Blech zu profilieren, mit den entsprechenden Aussparungen/Stanzungen zu versehen und dann erst auf eine Länge abzuschneiden, die den Umfang des fertigen ringförmigen Abschnittes erzeugt.

Der oder die Abschnitte sind auf dem Hohlkörper aus Kunststoff oder aus einem Metall wie Stahl, Aluminium oder einer Legierung aus Buntmetallen befestigt, wie eine Ausgestaltung der Erfindung vorsieht. Dabei ist es auch denkbar mehrere Abschnitte in radialer Richtung aufeinanderzusetzen oder einen Abschnitt durch mehrere aufeinandergeschichtete Bleche gleicher oder unterschiedlicher Dicke und/oder gleicher bzw. unterschiedlicher Form aus und/oder gleichem oder unterschiedlichem Material zu fertigen. Mit dieser "pakettierten" Anordnung sind radiale Bauhöhen an der Schaltwalze und komplizierte Strukturen einfacher realisierbar.

Weiterhin ist vorgesehen, dass wenigstens ein Abschnitt den Hohlzylinder bildet, wobei das Blech in Umfangsrichtung kreisförmig geformt ist, so dass sich jeweils zwei aufeinander zugeformte Enden des Hohlzylinders gegenüberliegen, und wobei die Enden durch mehrere jeweils einzeln in jeweils eine Ausnehmung eingehängte Ansätze miteinander verbunden sind. Der zylindrische Teil der Schaltwalze ist somit materialsparend aus einem oder mehreren Blechabschnitten gefertigt. Die Bearbeitungszeiten sind kurz. Die Kosten für die Herstellung einer solchen Schaltwalze können gering gehalten werden. Der Hohlzylinder ist mit der oder den Führungsbahnen versehen. Eine sichere Verbindung der Biegeenden ist mittels mehrer Paarungen der erfindungsgemäßen Verbindung hergestellt. Die Schaltwalze ist somit formstabil ausgeführt und gehalten. Spanabhebende Nacharbeit ist kaum oder nicht erforderlich.

Die Führungsbahnen sind entweder auf den Hohlzylinder bzw. den/die Abschnitte aufgesetzt oder in die Wandung des Hohlzylinders bzw. den/die Abschnitt(e) eingebracht. Aufgesetzte Führungsbahnen stehen radial nach außen über die Mantelfläche der Schaltwalze hervor. Derartige Führungsbahnen sind durch Drahtprofile, alle denkbaren weiteren Profile oder durch hochkant gestellte Blechstreifen gebildet. Die genannten Profile sind vorzugsweise auf dem Hohlzylinder oder den Abschnitten durch Schweißen befestigt. Drahtprofile weisen bevorzugt einen Vierkantquerschnitt auf oder sind im Querschnitt rund. Andere Profile sind z. B. Profile mit U-förmigem Querschnitt. Mit hochkant gestellten Blechstreifen lassen sich über die Breite dieser Blechstreifen radial beliebig hohe bzw. tiefe Führungsbahnen erzeugen. In die Wandungen des Hohlzylinders/Abschnittes eingebrachte Führungsbahnen sind, und hier wiederum ins ausgestreckt vorliegende Ausgangsmaterial, vorzugsweise als eine die Wandung durchbrechende Nut erzeugt. Die Nut kann z. B. ausgestanzt werden. Geprägte oder gewalzte Führungsbahnen sind ebenfalls vorgesehen. Weisen der oder die Abschnitte die nutförmigen Durchbrüche auf und sind die Abschnitte auf dem Hohlzylinder befestigt, kann die Wandung des Hohlzylinders den Nutgrund bilden, oder an dieser Stelle ebenfalls einen Durchbruch aufweisen.

Schließlich ist für eine Schaltwalze mit Abschnitten auf einem Hohlzylinder oder mit einem durch einen/mehrere Abschnitt(e) gebildeten Hohlzylinder mit einer Ausgestaltung der Erfindung vorgesehen, dass wenigstens zwei der Abschnitte in Längsrichtung der Schaltwalze nebeneinander angeordnet sind und dass einander zugewandte Flächen der Abschnitte eine Nut für eine Führungsbahn begrenzen. Die Seitenwände der Führungsbahn/Nut sind dann beispielsweise durch die einander zugewandten Stirnseiten der/des Abschnitte(s) gebildet. Dabei kann die Fläche auch an einem durch beispielsweise Durchstellen der Nuten oder Abkanten des Abschnittes erzeugten Ende ausgebildet sein.

Das Ende steht dann vorzugsweise rechtwinklig radial nach außen oder radial nach innen weisend von dem Abschnitt ab. Denkbar ist es auch die einander zugewandten Kanten der Abschnitte abzukanten oder durchzustellen um die radiale Bauhöhe einer derartig ausgebildeten Führungsbahn zu erhöhen. Mit dieser Lösung sind besonders gewichtsparende Schaltwalzen einfach herzustellen.

### Kurze Beschreibung der Zeichnungen

Die Erfindung ist nachfolgend anhand von drei Ausführungsbeispielen näher erläutert. Es zeigen
- Figur 1: ein Ausführungsbeispiel einer erfindungsgemäßen Schaltwalze, bei der der Hohlzylinder aus einem Abschnitt geformt ist und die Führungsbahnen auf dem Hohlzylinder durch aufgesetzte Profile gebildet sind,
- Figur 2: die Schaltwalze nach Figur 1 in einem Längsschnitt entlang der Linie II-II,
- Figur 3: ein weiteres Ausführungsbeispiel einer Schaltwalze gemäß Erfindung, bei der Abschnitte auf einem Hohlzylinder angeordnet sind,
- Figur 4: einen Längsschnitt durch die Schaltwalze nach Figur 3 entlang der Linie III-III,
- Figur 4a: eine vergrößerte Darstellung des Details Z aus Figur 4 mit einer alternativen Ausbildung des Abschnittes 21 an der Führungsbahn 16,
- Figur 5: ein Ausführungsbeispiel einer erfindungsgemäßen Schaltwalze, bei der zwei Abschnitte durch eine Führungsbahn getrennt den Hohlzylinder bilden und
- Figur 6: einen Längsschnitt durch die Schaltwalze nach Figur 5 entlang der Linie VI.

### Detaillierte Beschreibung der Zeichnungen

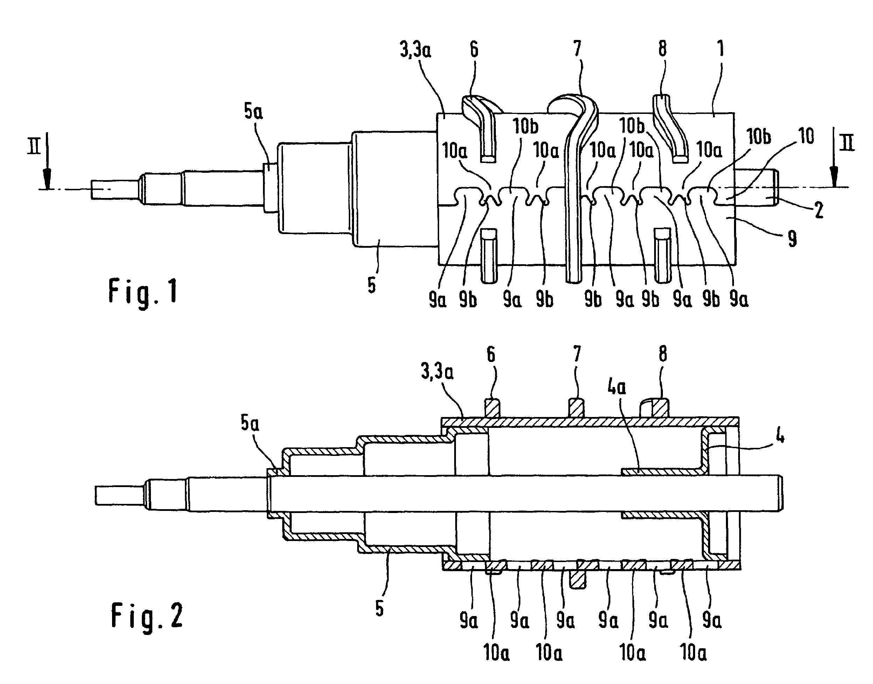

Figur 1 und Figur 2 zeigen ein Ausführungsbeispiel einer erfindungsgemäßen Schaltwalze 1 auf einer Welle 2. Die Schaltwalze 1 besteht aus einem Hohlzylinder 3, aus einem Flansch 4, einem Deckel 5 sowie Führungsbahnen 6, 7 und 8. Der Flansch 4 steckt in dem Hohlzylinder 3 und sitzt mit einem rohrförmigen Sitz 4a auf der Welle 2. Der Flansch 4 verschließt gleichzeitig den Hohlzylinder 3 zu einer seiner Längsseiten. Die andere Seite des Hohlzylinders 3 ist mit dem Deckel 5 verschlossen, der in dem Hohlzylinder steckt und mit einem Sitz 5a auf der Welle sitzt. Die Führungsbahnen 6, 7 und 8 sind durch ein Profil mit einem im Wesentlichen rechteckigem Querschnitt gebildet, umgreifen den Hohlzylinder 3 umfangsseitig zumindest teilweise und sind mit dem Hohlzylinder 3 verschweißt. Der Hohlzylinder 3, der Flansch 4 und der Deckel 5 sind aus Stahlblech gefertigt. Die Führungsbahnen 6, 7 und 8 sind von einem Profildraht geschnitten.

Der Hohlzylinder 3 ist aus einem Abschnitt 3a aus Blech gefertigt. Der Abschnitt 3a ist in Umfangsrichtung kreisförmig geformt. Die Enden 9 und 10 des Abschnittes 3a sind mit einer dauerhaften Verbindung aneinander befestigt. Das Ende 9 weist dazu stirnseitig abgehende Ansätze 9a auf, die in Längsrichtung der Schaltwalze 1 gesehen in abwechselnder Reihenfolge zusammen mit Ausnehmungen 9b angeordnet sind. Die Ansatze 9a weisen an ihren in Längsrichtung weisenden Flanken Hinterschneidungen auf und sind in Ausnehmungen 10b eingehängt. Jedes Ausnehmung 10b ist stirnseitig in Richtung des Endes 9 geöffnet sowie dem Umriss des Ansatzes 9a angepasst hinterschnitten. Jeder der Ansätze 9a ist jeweils in einer Ausnehmung 10b eingehängt und bildet eine formschlüssige Verbindung, die durch einen Presssitz der Ansätze 9a, 10a in den Ausnehmungen 9b, 10b gesichert ist. Die Ausnehmungen 10b wechseln sich in Längsrichtung der Schaltwalze 1 gesehen mit Ansätzen 10a in wechselnder Reihenfolge ab. Die Ansätze 10a sind in ihrem freien Ende geteilt und weisen an ihren in Längsrichtung weisenden Flanken Hinterschnitte auf, die mit den Hinterschnitten der Ausnehmungen 9b korrespondieren.

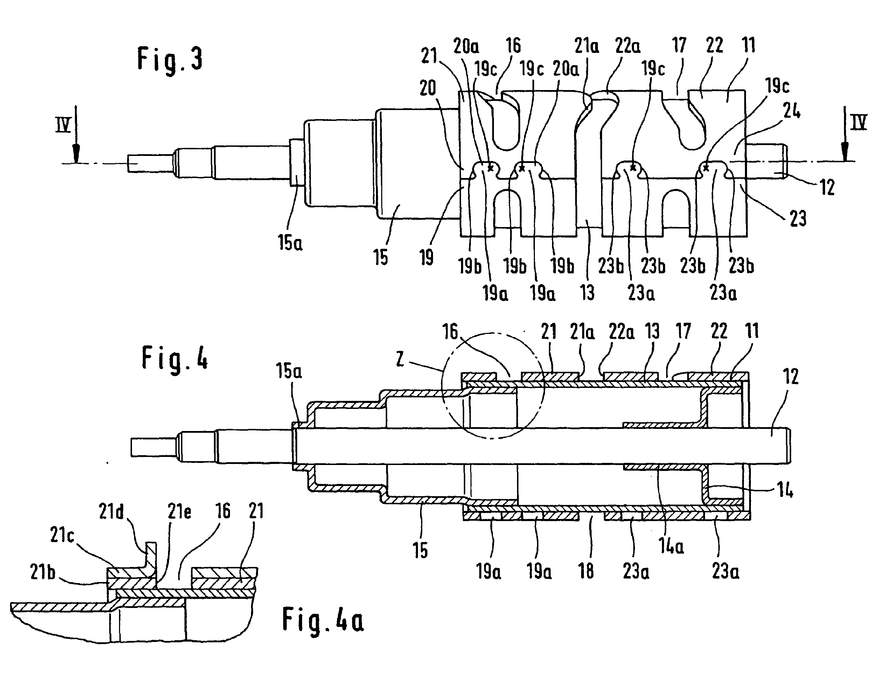

Figur 3 und Figur 4 zeigen ein weiteres Ausführungsbeispiel eine erfindungsgemäßen Schaltwalze 11. Die Schaltwalze 11 sitzt auf einer Welle 12 und ist durch einen Hohlzylinder 13, einen Flansch 14, einen Deckel 15 und zwei Abschnitte 21 und 22 gebildet. Der Hohlzylinder 13 ist aus einem Rohrstück gefertigt und sitzt auf dem Flansch 14 und dem Deckel 15. Der Flansch 14 und der Deckel 15 stecken in dem Hohlzylinder 13 und verschließen diesen. Mit einem rohrförmigen Sitz 14a ist der Flansch auf die Welle 12 aufgepresst. Der Deckel 15 ist turmartig ausgebildet und sein Durchmesser verringert sich stufenweise bis auf einen Durchmesser des Sitzes 15a. Mit dem Sitz 15a sitzt der Deckel 15 auf der Welle 12. Die Abschnitte 21 und 22 umgreifen den Hohlzylinder 13 in Umfangsrichtung und sind auf diesem in Längsrichtung der Schaltwalze 11 gesehen nebeneinander angeordnet. Der Abschnitt 21 weist eine Führungsbahn 16 und der Abschnitt 22 eine Führungsbahn 17 auf. Die Führungsbahnen 16 und 17 sind durch Stanzen als ein die Wandung der jeweiligen Abschnitte 21, 22 durchbrechende Nut in die Abschnitte 21 bzw. 22 eingebracht. Die Führungsbahnen 16 und 17 sind am Nutgrund durch die Außenmantelfläche des Hohlzylinders 13 begrenzt. Zwischen den Abschnitten 21 und 22 ist an der Schaltwalze 11 eine Führungsbahn 18 ausgebildet. Die Führungsbahn 18 ist durch die einander zugewandten stirnseitigen Flächen 21a und 22a der Abschnitte 21 und 22 begrenzt. Den Nutgrund bildet wieder der in diesem Bereich unverdeckte Teil der Außenmantelfläche des Hohlzylinders 13. Die Abschnitte 21 und 22 auf dem Hohlzylinder 13 in Figur 3 sind jeweils aus einem Blech gefertigt, das in Umfangsrichtung der Schaltwalze 11 ringförmig geformt ist. Die jeweils aufeinander zugebrachten Enden 19, 20 des Abschnittes 21 sowie die Enden 23, 24 des Abschnittes 22 sind jeweils durch einen Formschluss miteinander verbunden. Der Abschnitt 21 weist dazu an seinem Ende 19 Ansätze 19a auf. Die Ansätze 19a sind an ihren beiden Flanken 19b hinterschnitten und greifen jeweils in eine Ausnehmung 20a an dem Ende 20 ein. Aus jedem der Ansätze 19a ist mittels einer Prägung 19c Material zum Rand des Ansatzes 19a bzw. der Ausnehmung 20a verdrängt. Jeder Ansatz 19a ist somit unlösbar in der Ausnehmung 20a gesichert. Die Enden 23 und 24 sind nach dem gleichen Prinzip wie die Enden 19 und 20 jedoch über Ansätze 23a und Ausnehmungen 24a miteinander verbunden.

Figur 4a zeigt alternativ zu Figur 4, wie der Abschnitt 21 aus zwei konzentrisch zueinander angeordneten ringförmig gebogenen und erfindungsgemäß verbundenen Blechen 21b und 21c gebildet ist. Das Blech 21c des Abschnittes ist an einer Seite mittels einer Durchstellung derartig verformt, dass ein radial nach außen abgewinkeltes Ende 21d erzeugt ist. Die Fläche des Endes 21d und die Schnittkante 21e begrenzen an einer Seite die Nut und somit die Führungsbahn 16.

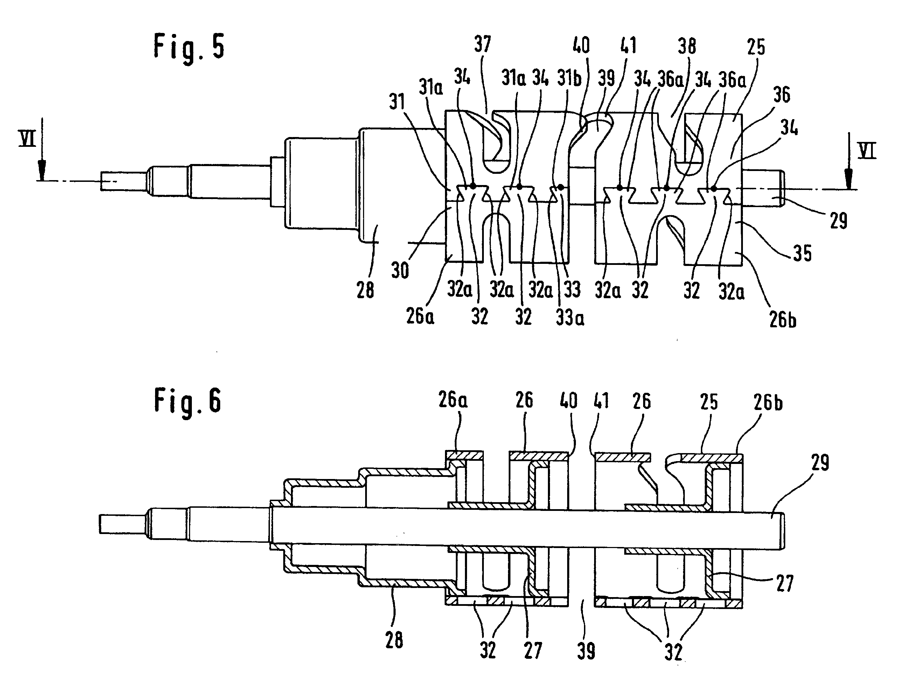

In Figur 5 und Figur 6 ist eine Schaltwalze 25 dargestellt, deren Hohlzylinder 26 aus zwei in Längsrichtung der Schaltwalze 25 nebeneinander und beabstandet zueinander angeordneten Abschnitten 26a und 26b gebildet ist. Jeder der Abschnitte 26a und 26b sitzt jeweils auf einem Flansch 27. In den ringförmigen Abschnitt 26a ist außerdem ein Deckel 28 eingepresst. Der Deckel 28 und die Flansche 27 sitzen auf einer Welle 29. Jeder der Abschnitte 26a und 26b ist jeweils ringförmig aus einem Blech geformt. Das Ende 30 des Abschnittes 26a weist in Richtung des Endes 31 hervorstehende Ansätze 32 und 33 auf. Der Ansatz 32 ist an beiden Flanken 32a hinterschnitten ausgeführt, während der Ansatz 33 an einer Flanke 33a einen Hinterschnitt aufweist. Die Ansätze 32 bzw. 33 sind in Ausnehmungen 31a bzw. 31b des Endes 31 eingehängt. Die Ansätze 32 bzw. 33 sind in den Ausnehmungen 31a bzw. 31b mittels einer Schweißung 34 gesichert. Der Abschnitt 26b weist an seinem Ende 35 drei der Ansätze 32 auf. Die Ansätze 32 greifen in Ausnehmungen 36a des Endes 36 ein und sind dort jeweils mit einer Schweißung 34 gesichert. Der Abschnitt 26a weist eine Führungsbahn 37 und der Abschnitt 26b eine Führungsbahn 38 auf. Die Führungsbahnen 37 und 38 sind durch eine die Wandung des jeweiligen Abschnittes 26a bzw. 26b durchbrechende Nut gebildet. Die Führungsbahn 39 ist durch die einander zugewandten und zueinander beabstandeten stirnseitigen Flächen 40 bzw. 41 begrenzt. Die Führungsbahn 39 ist somit gleichzeitig durch eine die Wandung des Hohlzylinders 26 durchbrechende Nut gebildet.

### Bezugszahlen

- 1: Schaltwalze
- 2: Welle
- 3: Hohlzylinder
- 3a: Abschnitt
- 4: Flansch
- 4a: Sitz
- 5: Deckel
- 5a: Sitz
- 6: Führungsbahn
- 7: Führungsbahn
- 8: Führungsbahn
- 9: Ende
- 9a: Ansatz
- 9b: Ausnehmung
- 10: Ende
- 10a: Ansatz
- 10b: Ausnehmung
- 11: Schaltwalze
- 12: Welle
- 13: Hohlzylinder
- 14: Flansch
- 14a: Sitz
- 15: Deckel
- 15a: Sitz
- 16: Führungsbahn
- 17: Führungsbahn
- 18: Führungsbahn
- 19: Ende
- 19a: Ansatz
- 19b: Flanke
- 19c: Prägung
- 20: Ende
- 20a: Ausnehmung
- 21: Abschnitt
- 21a: Flächen
- 21b: Blech
- 21c: Blech
- 21d: Ende
- 21e: Schnittkante
- 22: Abschnitt
- 22a: Flächen
- 23: Ende
- 23a: Ansatz
- 24: Ende
- 24a: Ausnehmung
- 25: Schaltwalze
- 26: Hohlzylinder
- 26a: Abschnitt
- 26b: Abschnitt
- 27: Flansch
- 28: Deckel
- 29: Welle
- 30: Ende
- 31: Ende
- 31a: Ausnehmung
- 31b: Ausnehmung
- 32: Ansatz
- 32a: Flanke
- 33: Ansatz
- 33a: Flanke
- 34: Schweißung
- 35: Ende
- 36: Ende
- 36a: Ausnehmung
- 36b: Ausnehmung
- 37: Führungsbahn
- 38: Führungsbahn
- 39: Führungsbahn
- 40: Fläche
- 41: Fläche

## Patentansprüche

1. Schaltwalze (1, 11, 25) eines Wechselgetriebes mit einem um die Längsmittelachse der Schaltwalze (1, 11, 25) zumindest schwenkbaren Hohlzylinder (3, 13, 26) und mit zumindest einem Abschnitt (3a, 21, 22, 26a, 26b) aus einem Blech, wobei der Abschnitt, (3a, 21, 22, 26a, 26b) mit wenigstens einer Führungsbahn (6, 7, 8, 16, 17, 18, 37, 38, 39) versehen ist und das Blech in Umfangsrichtung der Schaltwalze (1, 11, 25) ringförmig geformt ist, so dass sich jeweils zwei aufeinander zugebrachte Enden (9, 10, 19, 20, 30, 31, 35, 36) des Abschnittes (3a, 21, 22, 26a, 26b) gegenüberliegen und die Enden (9, 10, 19, 20, 30, 31, 35, 36) miteinander verbindbar sind, **dadurch gekennzeichnet, dass** die Enden (9, 10, 19, 20, 30, 31, 35, 36) durch wenigstens einen an zumindest einem der Enden (9, 10, 19, 20, 30, 31, 35, 36) ausgebildeten sowie in eine Ausnehmung (9b, 10b, 20a, 31a, 31b) des gegenüberliegenden Endes (9, 10, 19, 20, 30, 31, 35, 36) greifenden Ansatz (9a, 10a, 19a, 32, 33) mit einander verbunden sind.

2. Schaltwalze nach Anspruch 1, **dadurch gekennzeichnet, dass** jeweils jedes der Enden (9, 10, 30, 31, 35, 36) Ansätze (9a, 10a, 32, 33) und Ausnehmungen (9b, 10b, 31a, 31b) aufweist.

3. Schaltwalze nach Anspruch 1, **dadurch gekennzeichnet, dass** die Ausnehmung (9b, 10b, 20a, 31a, 31b) ausgehend von einer Öffnung an der Stirnseite des Endes (9, 10, 20, 30, 31, 35, 36) eine Hinterschneidung aufweist,

4. Schaltwalze nach Anspruch 3, **dadurch gekennzeichnet, dass** der Ansatz (9a, 10a, 19a, 32, 33) mittels Formschluss in der Ausnehmung (9b, 10b, 20a, 31a, 31b) sitzt.

5. Schaltwalze nach Anspruch 4, **dadurch gekennzeichnet, dass** die Enden (30, 31, 35, 36) durch Schweißen aneinander gesichert sind.

6. Schaltwalze nach Anspruch 3, **dadurch gekennzeichnet, dass** der Ansatz (9a, 10a) mittels Pressung in der Ausnehmung gesichert ist.

7. Schaltwalze nach Anspruch 3, **dadurch gekennzeichnet, dass** der Ansatz (19a) durch aus dem Ansatz (19a) verdrängtes Material des Bleches in der Ausnehmung (20a) gesichert ist.

8. Schaltwalze nach Anspruch 1, **dadurch gekennzeichnet, dass** wenigstens ein Abschnitt (3a, 26a, 26b) den Hohlzylinder (3, 26) bildet, wobei das Blech in Umfangsrichtung kreisförmig geformt ist, so dass sich jeweils zwei aufeinander zugeformte Enden (9, 10, 30, 31, 35, 36) des Hohlzylinders (3, 26) gegenüberliegen, und wobei die Enden (9, 10, 30, 31, 35, 36) durch mehrere jeweils einzeln in jeweils eine Ausnehmung (9b, 10b, 31a, 31b) eingehängte Ansätze (4a, 5a, 32, 33) miteinander verbunden sind.

9. Schaltwalze nach Anspruch 8, **dadurch gekennzeichnet, dass** die Führungsbahn (6, 7, 8) durch wenigstens eine auf dem Hohlzylinder (3) angeordnete und radial nach außen gerichtet hervorstehende Wandung gebildet ist.

10. Schaltwalze nach Anspruch 8, **dadurch gekennzeichnet, dass** die Führungsbahn (37, 38,39) durch eine die Wandung des Hohlzylinders (26) durchbrechende Nut gebildet ist.

11. Schaltwalze nach Anspruch 1, **dadurch gekennzeichnet, dass** wenigstens einer der Abschnitte (21, 22) den Hohlzylinder (13) radial umgreifend auf dem Hohlzylinder (13) befestigt ist.

12. Schaltwalze nach Anspruch 11, **dadurch gekennzeichnet, dass** der Abschnitt (21, 22) mit wenigstens einer die Wandung des Bleches durchbrechende Nut für die Führungsbahn (16, 17) versehen ist.

13. Schaltwalze nach Anspruch 11, **dadurch gekennzeichnet, dass** der Abschnitt (21) durch wenigstens zwei in radialer Richtung aufeinander liegende Bleche (21b, 21c) gebildet ist.

14. Schaltwalze nach Anspruch 1, **dadurch gekennzeichnet, dass** wenigstens zwei der Abschnitte (21, 22, 26a, 26b) nebeneinander angeordnet sind und dass einander zugewandte Flächen (21a, 22a, 40, 41) der Abschnitte eine Nut für eine Führungsbahn (18, 39) begrenzen.

15. Schaltwalze nach Ansprüchen 8, 11 und 14, **dadurch gekennzeichnet, dass** die Nut der Führungsbahn (16) zumindest einseitig sowie zumindest teilweise durch wenigstens ein abgewinkeltes Ende (21d) des Abschnittes (21) begrenzt ist.
